Europäisches Patentamt

European Patent Office

Office européen des brevets

(19)

(11) **EP 0 708 683 B1**

(12) **EUROPÄISCHE PATENTSCHRIFT**

(45) Veröffentlichungstag und Bekanntmachung des Hinweises auf die Patenterteilung:
**07.10.1998 Patentblatt 1998/41**

(21) Anmeldenummer: **94924253.1**

(22) Anmeldetag: **15.07.1994**

(51) Int. Cl.$^6$: **B01J 20/24**, C02F 1/28

(86) Internationale Anmeldenummer:
**PCT/EP94/02338**

(87) Internationale Veröffentlichungsnummer:
**WO 95/02452 (26.01.1995 Gazette 1995/05)**

(54) **VERFAHREN ZUR HERSTELLUNG VON SORBENTIEN AUS POLYSACCHARIDHALTIGEN ROHSTOFFEN, SORBENTIEN UND IHRE VERWENDUNG**

PROCESS FOR PREPARING SORBENTS FROM POLYSACCHARIDE-CONTAINING RAW MATERIALS, SORBENTS AND THEIR USE

PROCEDE DE PREPARATION DE SORBANTS A PARTIR DE MATIERES PREMIERES CONTENANT DES POLYSACCHARIDES, SORBANTS ET LEUR UTILISATION

(84) Benannte Vertragsstaaten:
**DE**

(43) Veröffentlichungstag der Anmeldung:
**01.05.1996 Patentblatt 1996/18**

(73) Patentinhaber:
**Velitchko, Boris Afanasjevitch**
**Moscow 117571 (RU)**

(72) Erfinder:
- **RYSHAKOVA, Anna, Alexandrovna**
  **Moskau, 115487 (RU)**
- **ABRAMOVA, Galina, Vasilievna**
  **Moskovskaja obl. Tshechov, 142300 (RU)**
- **VELITCHKO, Boris, Afanasjevitch**
  **Moskau, 117571 (RU)**
- **SORITCH, Oleg, Borisovitch**
  **Moskau, 113186 (RU)**
- **TUMOVSKI, Lev, Alexandrovitch**
  **Moskau, 127550 (RU)**
- **VOLOCHOVA, Marina, Valerievna**
  **Moskau, 129323 (RU)**
- **SHUTOVA, Lydia, Alexandrovna**
  **Moskovskaja obl. Ljuberzy, 143013 (RU)**
- **SHTYRINA, Nadeshda, Alexandrovna**
  **Moskau, 123479 (RU)**
- **KIRILLOVA, Ljubov, Petrovna**
  **Moskau, 113149 (RU)**

- **Dr. Guenther Mann**
  **10318 Berlin (DE)**

(74) Vertreter:
**Ziebig, Marlene, Dr. Dipl.-Chem.**
**Patentanwälte**
**Gulde Hengelhaupt Ziebig**
**Lützowplatz 11-13**
**10785 Berlin (DE)**

(56) Entgegenhaltungen:
WO-A-91/03547     WO-A-92/15397
FR-A- 2 206 977     FR-A- 2 612 801
NL-A- 8 901 576     US-A- 4 067 821
US-A- 5 110 785

- DATABASE WPI Week 8242, Derwent Publications Ltd., London, GB; AN 82-90079E & SU,A,891 141 (URALS KIROV POLY) 23. Dezember 1981
- DATABASE WPI Week 7538, Derwent Publications Ltd., London, GB; AN 75-63059W & JP,A,50 051 988 (HITACHI) 9. Mai 1975

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Verfahren zur Herstellung von Sorbentien aus polysaccharidhaltigen Rohstoffen, die daraus erhaltenen Sorbentien und ihre Verwendung. Insbesondere betrifft die vorliegende Erfindung Verfahren, bei denen der polysaccharidhaltige Rohstoff zerkleinert und anschließend einer Behandlung in Anwesenheit eines Gemisches enthaltend Orthophosphorsäure, Dimethylformamid und Harnstoff unterworfen wird.

Auf dem Fachgebiet ist bereits bekannt, daß Materialien, die sich von biologischen Materialien ableiten, z.B. Schwermetalle oder Radionuklide binden können. Ferner werden Verfahren zur Herstellung dieser Materialien beschrieben.

Es ist ein Verfahren zur Herstellung von Sorbentien für Metallkationen bekannt, das die Modifizierung von Rübenschnitzeln durch Oxidationsmittel, wie Stickstoffoxid, Iodsäure oder ähnliches umfaßt (Urheberschein UdSSR Nr. 295770). Dieses Verfahren erfordert jedoch die Verwendung aggressiver oder toxischer Agentien, so daß die Notwendigkeit der Entsorgung einer großen Menge ökologisch schädlicher Abfallstoffe entsteht.

Ferner ist ein Verfahren zur Herstellung von Sorbentien bekannt, bei dem Aktivkohle durch Verkokung von Nußschalen mit anschließender Aktivierung durch überhitzten Dampf gebildet wird (US-A-4 616 001). Die in diesem US-Patent erhaltene Aktivkohle verfügt jedoch nicht über selektive Sorptionsfähigkeiten gegenüber Radionukliden und Schwermetallen.

Aus JP-62-57381 ist ein Adsorptionsmittel bekannt, das durch Oxidation von Polysacchariden erhalten wird, das jedoch keine selektiven Adsorptionseigenschaften gegenüber Radionukliden und Schwermetallen aufweist.

Ein weiteres Verfahren (JP-61-16504) beinhaltet die thermische Behandlung von biologischen Rohstoffen in Gegenwart von Formaldehyd oder seinen Derivaten. Auch dieses Verfahren ist mit der Bildung toxischer bzw. ökologisch schädlicher Abfallstoffe belastet.

Aus dem CSSR-Urheberschein Nr. 253070 ist die Behandlung von Abbauprodukten von Biomasse mit Harnstoff-Formaldehyd-Polykondensat bekannt.

Ferner ist ein Verfahren zur Herstellung von Sorbentien für Metalle aus Biomasse mittels Alkalilaugen bekannt (GB-A-2 168 076).

Fr-A- 2206977 beschreibt ein Verfahren zur Herstellung eines Adsorptionsmittels für Schwermetallionen, indem Phosphorsäure zu einem organischen Material mit reduzierenden funktionellen Gruppen zugegeben und das Gemisch bei 160-600°C gebrannt wird. Anschließend wird die Phosphorsäure mit Wasser ausgewaschen und das Produkt getrocknet.

Gemäß einem weiteren Verfahren wird Biomasse alkalisch behandelt, dann gewaschen und getrocknet (US-A-4 690 894).

Des weiteren ist ein Verfahren zur Herstellung von Biosorbentien für Radionuklide bekannt, das die Extraktion von Ballaststoffen aus der Biomasse, die bei der Produktion von Exohydrolasen anfällt, mittels eines Citrat-Phosphat-Puffer umfaßt (Urheberschein UdSSR Nr. 1738327). Das offenbarte Verfahren ist allerdings kompliziert und vielstufig und die erhaltenen Sorptionsmittel besitzen nur eine niedrige Sorptionsfähigkeit.

Außerdem ist ein Verfahren (Urheberschein UdSSR Nr. 1792738) bekannt, nach dem ein polysaccharidhaltiger Rohstoff mit einem Gemisch aus einem Kohlenwasserstofflösungsmittel und Alkohol behandelt wird. Die offenbarten Sorbentien zeigen nur eine niedrige Sorptionsfähigkeit gegenüber Radionukliden und Schwermetallen und ihr Herstellungsverfahren benötigt eine große Menge organischer Lösungsmittel.

Ein weiteres Verfahren zur Herstellung von Sorbentien für die Abwasserdekontamination basiert auf der Behandlung von Rübenschnitzeln mit chemischen Reagenzien (Melamin und Formaldehyd) (Urheberschein UdSSR Nr. 767125).

Bekannt ist außerdem ein Verfahren zur Herstellung von Sorbentien, bei dem der polysaccharidhaltige Rohstoff (Biomasse von Mikroorganismen) mit einem Gemisch aus 40 bis 80 % eines Kohlenwasserstofflösungsmittels und 60 bis 20 % Alkohol behandelt wird (UdSSR-Anmeldung Nr. 4807391/13 vom 29. 03. 1990).

Aus dem vorstehenden ergibt sich, daß die bekannten Verfahren meist vielstufig sind und neben Sorbentien mit mittelmäßigen Sorptionseigenschaften häufig größere Mengen giftiger und die Umwelt belastende Abfälle liefern.

Aufgabe der vorliegenden Erfindung ist es daher, Verfahren zur Herstellung von Sorbentien aus biologischem Material bereitzustellen, die einfach durchzuführen, nicht besonders energie- und materialintensiv sind und möglichst geringe Mengen an ökologisch unbedenklichen oder regenerierbaren Abfallstoffen bei hoher Ausbeute an spezifischen Sorbentien liefern, wobei sich die Sorbentien durch gute Sorptionseigenschaften (Verteilungskoeffizient Kd und Aufnahmekapazität S) gegenüber Schwermetallen, Radionukliden und/oder anderen toxischen Verbindungen auszeichnen sollen.

Die Aufgabe der Erfindung wird durch ein Verfahren zur Herstellung von Sorbentien gelöst, welches dadurch gekennzeichnet ist, daß polysaccharidhaltige Rohstoffe zerkleinert werden, anschließend einer thermischen Behandlung in Anwesenheit eines Modifizierungsmittelgemisches unterworfen werden, das Substrat danach gereinigt, getrocknet und zermahlen wird.

Erfindungsgemäß können als polysaccharidhaltige Rohstoffe alle zur Verfügung stehenden Rohstoffe eingesetzt werden, die Polysaccharide enthalten. Bevorzugt sind polysaccharidhaltige Rohstoffe aus nachwachsenden Rohstoffquellen, wie z.B. Rübenschnitzel bzw. -melasse, Malzkeime und Weizenkleie oder Abfälle aus mikrobiologischen Produktionen z.B. Biomasse von mycelsynthetisierenden Pilzen.

In Abhängigkeit von dem eingesetzten polysaccharidhaltigen Rohstoff umfaßt die thermische Behandlung einmaliges oder mehrmaliges Erhitzen auf Temperaturen im Bereich von Raumtemperatur bis 600°C. Bei Verwendung von Enzymen sind die dem Fachmann bekannten Arbeitstemperaturen einzuhalten.

Nach dem Behandlungsverfahren werden die erfindungsgemäßen Sorbentien in an sich bekannter Weise, z.B. durch Filtration oder Zentrifugation gewonnen und falls notwendig, z.B. mit Wasser gereinigt. Die anschließende Trocknung erfolgt in Abhängigkeit vom erhaltenen Produkt in an sich bekannter Weise, z.B. durch Erwärmen und/oder reduzierten Druck. Falls notwendig kann das erhaltene Produkt mittels üblicher Verfahren zerkleinert werden.

In der erfindungsgemäßen Ausführungsform wird der zerkleinerte polysaccharidhaltige Rohstoff in Gegenwart eines Gemisches, welches Orthophosphorsäure, Dimethylformamid und Harnstoff enthält, erhitzt. Vorzugsweise wird das Endprodukt im Verhältnis 1:0,1 bis 1:99, insbesondere 1:1 bis 1:99 mit Füllstoffen vermischt. Als Füllstoffe dienen vorzugsweise der als Ausgangsstoff verwendete polysaccharidhaltige Rohstoff in bei Bedarf dampf- und temperaturbehandelter Form.

Gemäß der vorstehenden Aufgabe wird erfindungsgemäß ein Verfahren zur Herstellung von Sorbentien zur Verfügung gestellt, das die Berücksichtigung folgender wirtschaftlicher und ökologischer Gesichtspunkte ermöglicht:

- Verwendung von Sekundärrohstoffe, d.h. Abfällen aus Produktion und Landwirtschaft (sich jährlich natürlich regenerierende pflanzliche Rohstoffe)
- Verwendung von regelmäßig verfügbaren Rohstoffen ohne teure Transportwege und ohne Abhängigkeit von klimatischen Problemen
- Integration neuer Technologien in vorhandene Infra- und Industriestrukturen, um anfallende Abfälle vor Ort in neue hochwertige Produkte umzuwandeln
- Produktion von Sorbentien ohne teure Zuschlagstoffe
- Vermeidung von Technologien, die energie- und/oder materialintensiv sind
- Erzeugte Sorbentien sollten sich durch spezifische Charakteristika auszeichnen, um sie kostengünstig einsetzen zu können; sie sollten darüber hinaus mischbar sein
- Vermeidung oder starke Begrenzung von schädlichen Abfallstoffen bei der Herstellung
- Schädliche Abfallstoffe sollten regenerierbar sein.

Bei den erfindungsgemäßen Verfahren zur Herstellung von Sorbentien werden polysaccharidhaltige Rohstoffe verwendet, bevorzugt werden dabei Rübenschnitzel bzw. -melasse, Malzkeime, Weizenkleie sowie die Biomasse von mycelsynthetisierenden Pilzen. Bei den Pilzen sind Aspergillus species z.B. Aspergillus foetidus M-45 oder Aspergillus awamori F-122 und Trichoderma species, z.B. Trichoderma viride besonders bevorzugt.

Die erfindungsgemäßen Verfahren sind außerdem dadurch gekennzeichnet, daß die Rohstoffe zerkleinert, vorzugsweise bis zu einer Partikelgröße von maximal 3 mm, insbesondere 2 mm, und anschließend einer thermischen Behandlung unterworfen werden, wobei die thermische Behandlung in Anwesenheit von Modifizierungsmitteln geschieht. Das erhaltene Substrat wird danach gereinigt, getrocknet und zermahlen.

Die erfindungsgemäße Ausführungsform ist dadurch gekennzeichnet, daß die polysaccharidhaltigen Rohstoffe mit einem Gemisch versetzt werden, welches Orthophosphorsäure, Dimethylformamid und Harnstoff enthält. Die erhaltenen Sorbentien weisen besonders bezüglich Uran und Quecksilber, hohe Aufnahmekapazitäten auf. In einer besonderen Ausführungsform werden die gewonnenen Sorbentien im Verhältnis 1:0,1 bis 1:99, vorzugsweise 1:1 bis 1:99 mit Füllstoffen gemischt, wobei als Füllstoffe bevorzugt polysaccharidhaltige Rohstoffe verwendet werden, die vorzugsweise polysaccharidhaltigen Rohstoffe insbesondere dampfbehandelte Rohstoffe oder temperaturbehandelte Rohstoffe umfassen. Ferner sind Füllstoffe wie Aktivkohle verwendbar. Diese Gemische aus Sorbentien und Füllstoffen können u.a. zur Herstellung von Zigarettenfiltern verwendet werden, da sie sowohl eventuelle Kontaminationen des verwendeten Tabaks mit Radionukliden oder Schwermetallen entfernen als auch andere gefährliche Komponenten, wie Teer im Tabakrauch reduzieren.

**Beispiele**

Der Affinitätsgrad eines Sorbens mit dem zu dekontaminierenden Element wurde durch den Verteilungskoeffizienten (Kd), der als Standardmethode definiert wird, qualitativ und quantitiv charakterisiert. So wurden 50 mg Sorbens und 1 ml einer mit einem Markierungsisotop (1-100 Bq) versetzten Salzsäurelösung in ein Prüfglas mit geschliffenem Stopfen gegeben und bei Zimmertemperatur über 6-8 Stunden intensiv gemischt, so daß sich ein Gleichgewicht im wesentlichen einstellt. Der Gehalt des sorbierten Elementes im Substrat betrug dabei nur Teile eines Mikrogramms, d.h. die Möglichkeit der Sättigung des Sorbens durch das sorbierte Element war real ausgeschlossen. Dies stellt eine notwendige Bedingungen bei der Bestimmung des Verteilungskoeffizienten dar, dessen Wert nach folgender Formel berechnet wird:

$$Kd = (M_{fest}/M_{fl}) \times (V_{fl}/P_{tS}),$$

wobei

$M_{fest} =$ Masse des sorbierten Elementes in der festen Phase
$M_{fl} =$ nicht sorbierte Masse des zu sorbierenden Elementes
$V_{fl} =$ Volumen der flüssigen Phase (ml)
$P_{tS} =$ Masse des trockenen Sorbens (g).

Zur Bestimmung der Aufnahmekapazität S der hergestellten Sorbentien wurde die Methode radioaktiver Spurenelemente genutzt. Das Sorbens wird durch ein stabiles Element, markiert durch ein radioaktives Isotop, gesättigt: In ein Prüfglas mit geschliffenem Stopfen werden 100 mg Sorbens, 0,5 ml wäßrige Lösung, die 2-10 mg des stabilen Elementes enthält, und 1 ml Salzsäurelösung (pH = 5), die das Markierungsisotop (1-100 Bq) enthält, gegeben. Das erhaltene Gemisch wird stetig über 6-8 Stunden geschüttelt. Im Anschluß daran wird, die flüssige Phase von der festen durch Zentrifugierung separiert. 0,1 ml der flüssigen Phase werden auf ein Plättchen aus rostfreiem Stahl aufgebracht und unter einer Trockenlampe verdunstet, mit Folie überklebt. Danach wird die γ-Aktivität bestimmt. Aus der Differenz der Aktivitäten der Ausgangs- und der durch das Sorbens dekontaminierten Lösung wird der Aktivitätsanteil (und entsprechend der Anteil des sorbierten Elements) definiert, der in das Sorbens übergegangen ist. Die im Prüfglas verbliebene Probe mit dem, Sorbens wird erneut über mehrere Stunden geschüttelt und die γ-Aktivität wird nochmals gemessen. Nach der Zentrifugation wird die Flüssigkeit mittels einer Pipette vollständig entnommen: die feste Phase wird mit je 1 ml Wasser zweimal gewaschen. Man gibt 1 ml 0,2 N HCl zu und schüttelt das erhaltene Gemisch über 4-6 Stunden, so daß die Desorption des Elementes aus dem Sorbenten gewährleistet wird. Nach der Zentrifugierung werden 0,1 ml der flüssigen Phase wiederum auf ein Plättchen gegeben und es wird die γ-Aktivität gemessen. Die mittlere Aufnahmekapazität eines Sorbens wird über 3 Messungen gemittelt und in mg Element/g Sorbens angegeben.

Bei der Untersuchung der Sorptionseigenschaften der hergestellten Sorbentien bzgl. Cäsium, Strontium, Kobalt, Cer, Cadmium, Kupfer, Quecksilber, Uran, Plutonium und Europium, wurde in Salzlösungen (Konzentrationen von 1 mg/l, bei Cäsium 4 mg/l) der entsprechenden Elemente folgende Sorbenseinwaage vorgenommen: 0,1 g Sorbens auf 10 ml Lösung. In der Probe wurde nach Ablauf einer Stunde der Gehalt der vorgenannten Elemente gemessen. Für die Messungen wurden die nachfolgenden Geräte benutzt: FLA-FO-4 (Cs), AAC (Cu), Plasma-100 (übrige Elemente). Der Meßfehler betrug 10 - 15 %.

Nachfolgend wird die Erfindung anhand der Beispiele weiter erläutert.

**Beispiele 1**

10 g Biomasse von Aspergillus foetidus M-45 (Reg.-Nr. F-81) wird zerkleinert - die Teilchen sollen nicht größer als 3 mm sein - im Kolben unter Rückfluß mit einem Gemisch, welches 7,5 g Orthophosphorsäure, 10 ml Dimethylformamid und 50 g Harnstoff enthält, bei 150°C 2 Stunden lang gekocht. Dann wird das Gemisch filtriert, der feste Rest wird mit destilliertem Wasser bis zum Neutralwert der flüssigen Phase gewaschen, der gewaschene Rückstand wird getrocknet und so zerkleinert, daß die Teilchen nicht größer als 3 mm sind. Die statistischen Kapazitäten des erhaltenen Sorbens sind Tabelle I zu entnehmen.

**Beispiele 2**

Durchführung gemäß Beispiel 1; als Ausgangsrohstoff wird die Biomasse von Aspergillus awamori (Reg.-Nr. F-122) verwendet; es wird 3 bis 4 Stunden lang gekocht. Die statistischen Kapazitäten des erhaltenen Sorbens sind Tabelle I zu entnehmen.

**Vergleichsbeispiel**

Die Biomasse von Aspergillus foetidus M-45 (Reg.-Nr. F-81) wird mit der fünffachen Menge eines Gemisches, welches 40 % Hexan und 60 % Isopropanol enthält, bei 80°C 2 Stunden lang behandelt. Der feste Rest wird mittels Filtration abgetrennt, mit destilliertem Wasser gewaschen, getrocknet und zerkleinert.
Die statistischen Kapazitäten des erhaltenen Sorbens sind Tabelle I zu entnehmen.

Tabelle I

| zu sorbierendes Element | Statistische Kapazität, mg/g | | |
|---|---|---|---|
| | Beispiele | | |
| | 1 | 2 | Vergleichsbeispiel |
| Uran | 340 | 400 | 80 |
| Quecksilber | 204 | 190 | 75 |
| Kupfer | 85 | 75 | 15 |
| Cadmium | 90 | 76 | 17 |
| Zink | 65 | 67 | 12 |

**Patentansprüche**

1. Verfahren zur Herstellung von Sorbentien, dadurch gekennzeichnet, daß polysaccharidhaltige Rohstoffe zerkleinert und anschließend in Gegenwart eines Gemisches, enthaltend Orthophosphorsäure, Dimethylformamid und Harnstoff, erhitzt werden, danach das Substrat gereinigt, getrocknet und zermahlen wird.

2. Verfahren gemäß Anspruch 1, dadurch gekennzeichnet, daß als polysaccharidhaltiger Rohstoff Biomasse von mycelsynthetisierenden Pilzen, Rübenschnitzel, Malzkeime oder Weizenkleie eingesetzt wird.

3. Verfahren gemäß Anspruch 1, dadurch gekennzeichnet, daß das erhaltene Produkt im Verhältnis 1:0,1 bis 1:99 mit Füllstoffen gemischt wird.

4. Sorbens erhältlich gemäß einem der Ansprüche 1 bis 3.

5. Verwendung der Sorbentien gemäß Anspruch 4 zum Binden von Radionukliden, Schwermetallen und/oder anderen toxischen Stoffen.

6. Verwendung der Sorbentien erhältlich gemäß Anspruch 3 in Filtern für Zigaretten.

**Claims**

1. Process for preparing sorbents, characterised in that polysaccharide-containing raw materials are comminuted and subsequently heated in the presence of a mixture containing orthophosphoric acid, dimethyl formamide, and urea and that, thereafter, the substrate will be cleaned, dried, and ground.

2. Process according to Claim 1, characterised in that biomass of mycelium-synthesising fungi, sugar beet chips, malt rootlets, or wheat bran is used as polysaccharide-containing raw material.

3. Process according to Claim 1, characterised in that the product obtained is mixed with fillers in the proportion of 1 : 0.1 to 1 : 99.

4. Sorbent obtainable according to one of Claims 1 to 3.

5. Use of the sorbents according to Claim 4 for binding radionuclides, heavy metals, and/or other toxic substances.

6. Use of the sorbents obtainable according to Claim 3 in filters for cigarettes.

**Revendications**

1. Procédé pour la préparation des sorbants, caractérisé en ce que des matériaux bruts contenant du polysaccharide sont fractionnés et puis échauffés en présence d'un mélange contenant d'acide orthophosphorique, du diméthyl formamide, et de l'urée et que, après cela, le substrat sera nettoyé, séché, et pulvérisé.

2. Procédé selon Revendication 1, caractérisé en ce que de la biomasse des fungi mycélium-synthétisants, des cossettes de betteraves, des radicelles de malt, ou du son de blé est utilisée comme matérial brut contenant du polysaccharide.

3. Procédé selon Revendication 1, caractérisé en ce que le produit obtenu est mélangé avec des charges à proportion d'1 : 0.1 à 1 : 99.

4. Le sorbant que l'on peut obtenir selon une des Revendications 1 à 3.

5. L'utilisation desdits sorbants selon Revendication 4 pour fixer des radionuclides, des métaux lourds et/ou d'autres substances toxiques.

6. L'utilisation desdits sorbants que l'on peut obtenir selon Revendication 3 dans des filtres pour cigarettes.